# EUROPEAN PATENT SPECIFICATION

(11) **EP 2 868 635 B1**
(45) Date of publication and mention of the grant of the patent: **10.08.2016**
(21) Application number: 13190760.2
(22) Date of filing: 29.10.2013
(51) Int. Cl.: C04B 7/02

(54) **Cement clinker cooler and method for cooling cement clinker**
Zementklinkerkühler und Verfahren zum Kühlen von Zementklinkern
Refroidisseur de clinker de ciment et procédé de refroidissement de clinker de ciment

(43) Date of publication of application: 06.05.2015
(73) Proprietor: Alite GmbH, 31535 Neustadt (DE)
(72) Inventor: Köhler, Reinhard, 31535 Neustadt (DE); Weiss, Thomas, 31535 Neustadt (DE)
(74) Representative: Jöstingmeier, Martin

(56) References cited:
- FR-A1- 2 441 595
- GB-A- 2 167 740
- KR-B1- 780 000 102
- US-A- 3 425 853

## Description

### Field of the invention

The invention relates to the manufacture of white cement clinker, as well referred to as white clinker, as being necessary for obtaining for example White Portland Cement.

### Description of the related art

The process for manufacturing white clinker is rather similar to the process of manufacturing grey clinker. As usual raw meal is calcined and sintered in a kiln. In most cases the raw meal used for the manufacture of white clinker has a slightly different composition as elements with a coloring effect on clinker like chromium, manganese, iron, copper, vanadium, nickel and titanium should be avoided. After sintering of the calcined raw meal the thereby obtained clinker is quenched, i.e. rapidly cooled from about 1450°C to 1500°C to temperatures of 600°C or lower using cold water, to avoid the formation of metal oxides, as these oxides color the clinker.

A method for quenching clinker in a three stage clinker cooler is disclosed in DE 2404086. The hot clinker is unloaded on a grate floor of the first stage and cooled by aeration of the clinker. The thereby obtained preheated air is used as oxygen source for the kiln, i.e. as combustion gas. Subsequently, the clinker is discharged in a water cooling vessel and quenched using cold water. Thereby, large amounts of steam are produced which are condensed or pass a stack as exhaust to the atmosphere. The next stage of the clinker cooler is again a grate floor for aeration of the clinker. The remaining heat of the clinker heats the air passing through the clinker, whereby the clinker is dried. The warm humid air is used as coolant for the first stage and thus as combustion gas. This method has a couple of disadvantages, first the clinker is brought in contact with oxygen in the first stage resulting in unwanted metal oxides as part of the clinker. Secondly, the amount of fuel required for obtaining a given kiln temperature is enhanced due to the high humidity of the combustion gas.

Other methods for the manufacture of white cement omit the first stage and immediately quench the hot clinker using water. However, the fuel consumption is further increased, because the combustion gas cannot be preheated.

GB 2167 740A relates to the manufacture of white cement clinker. The clinker is sintered in a kiln being fired with coal gas. The coal gas is preheated in a clinker cooler by direct heat exchange with the clinker, which is in turn cooled down to a non-reoxidising temperature. The preheated coal gas is subsequently used for firing the kiln.

US 3,425,853 as well relates to the manufacture of white cement clinker and suggests to cool hot clinker provided by a kiln using an indirect heat exchanger. The heat exchanger has water cooled worm screws for conveying, mixing and cooling the clinker in the cooler.

FR 2 441 595 suggests a calciner for clinker manufacturing with a hot air inlet and raw meal inlet. The raw meal is calcined while being transported through the calciner by the hot air flow. Subsequently the hot air and the calcined raw meal are separated. The calcined raw meal is provided to a kiln and the hot air to an indirect heat exchanger. In said indirect heat exchanger heat from said hot air is transferred to ambient air, which in turn is provided to the hot air inlet of the calciner.

KR 780 000 102 as well relates to cooling of white cement clinker using a gas.

### Summary of the invention

The problem to be solved by the invention is to provide a method and an apparatus for the manufacture of white clinker with reduced fuel consumption and a low percentage of metal oxides like Fe₂O₃ or the like.

Solutions to the problem are described in the independent claims. The dependent claims relate to further improvements of the invention.

The invention is based on the observation that water quenching is unfavorable, because wet clinker has to be dried again and because water quenching yields at this process stage undesired calcium hydroxide. A direct heat exchange of the combustion gas with hot clinker as it is standard for gray clinker is as well unfavorable, as this would oxidize the remaining metals in the clinker and yield a low quality 'white'.

According to the method, clinker is sintered, preferably in a kiln and unloaded to a clinker cooler, briefly as well referred to as cooler. Preheated combustion gas is provided to the kiln as oxygen source for burning any kind of fuels in the kiln. Thus, the combustion gas can be simple air with about 20% of oxygen, but as well pure oxygen or any mixture of gases comprising a sufficient amount of oxygen. The term 'combustion gas' is thus not limited to air consisting typically of about 20% Oxygen (O₂) and 78% Nitrogen (N₂), but shall be understood, i.e. defined, as any gas or mixture of gases being provided to the kiln as oxygen source for the combustion of any kind of combustible in the kiln. For example one could use more or less pure oxygen as combustion gas.

In the clinker cooler thermal energy is exchanged between the hot clinker and a gaseous low oxygen coolant to thereby cool the clinker and in return heat the gaseous low oxygen coolant. This can be obtained e.g. by subjecting the cement clinker grains to a flow of said gaseous low oxygen coolant. The gaseous low oxygen coolant has low free oxygen content, e.g. smaller than or equal to 7.5%, preferably smaller than or equal to 2.5% of free oxygen per volume of low oxygen coolant, to thereby reduce oxidization of metal phases in the clinker. Preferably the oxygen content of the low oxygen coolant is smaller than or equal to 1% or even more preferred smaller than or equal to 0.5% or even smaller than or equal to 0.1%. The lower the oxygen content the better it is. When raising the oxygen content the white cement becomes more and more grey and when lowering the oxygen content the white cement becomes whiter. The critical oxygen content of a coolant provided to a given clinker cooler is thus a question of the acceptable coloration.

The heated low oxygen coolant is drawn off from the clinker cooler and provided to at least one first heat exchanger for preheating the combustion gas and in turn cooling the heated low oxygen coolant.

The solution as suggested by the invention is to use a gaseous low oxygen coolant with a low oxygen percentage (smaller 2.5%, preferably smaller 1%, more preferably smaller 0.5%) for cooling the hot clinker, e.g. an inert gas or a mixture of inert gases. Traces of oxygen can in practice not be avoided and are acceptable as long as the quality of the clinker is not noteworthy affected. However, the lower the oxygen content is, the better is the quality of the white clinker. For this first cooling step any known in the art clinker cooler can be used. The low oxygen coolant is thus heated by heat transfer from the clinker to the low oxygen cool-ant. The clinker and the low oxygen coolant may be in direct contact, as the low oxygen coolant will not oxidize traces of metal in the clinker like e.g. iron oxide and thus not affect the clinker's color. However, different from the prior art cement clinker lines, the heated low oxygen coolant is not provided to the kiln as combustion gas but instead drawn off from the clinker cooler and provided to at least one first heat exchanger as heat source. In practice it might be difficult to completely seal the clinker cooler against the kiln as there must be a connection for providing clinker to the cooler. Thus, a part of the low oxygen coolant heated by the clinker may be provided to the kiln, but at least 50% of the heated low oxygen coolant is preferably drawn off from the clinker cooler and not provided to the kiln. At least a part of said at least 50% of the heated low oxygen coolant is provided to said at least one first heat exchanger for heating the combustion gas. Preferably at least 75% of the low oxygen coolant are drawn off and e.g. provided at least in part to the at least one first heat exchanger for cooling the coolant and in return heating combustion gas, the latter being provided to the kiln. Even more preferred 90% of the heated coolant or more are not provided to the kiln but provided at least in part to said first heat exchanger. This aspect of the technical teaching may be summarized as providing only that amount of the low oxygen coolant to the kiln that is necessary to avoid significant dilution of the low oxygen coolant in the clinker cooler. In addition a low oxygen coolant flow from the clinker cooler to the kiln reduces the contact of the clinker being deposited mostly via a chute in the clinker cooler with the combustion gas being present at the kiln hood. The chute is typically a vertical duct or may be inclined, this 'chute' is generally referred to as cooler throat.

In the first heat exchanger, cold combustion gas is heated by heat transfer from the low oxygen coolant to the combustion gas. The heated combustion gas is provided to the kiln. The low oxygen coolant is cooled down in said first heat exchanger and may be reused, i.e. the coolant may, after being cooled down, be provided to a clinker cooler at its coolant inlet side. In this sense, at least a part of the low oxygen coolant may be guided in a closed loop between the clinker cooler and the first heat exchanger. There may be additional components included in the loop, like e.g. dust removal means, pressurizing means and/or at least one second heat exchanger.

If the coolant is reused one may initially use simple air as coolant. However, at start up of the cement clinker process the clinker will be grey clinker due to the oxygen in the coolant, oxidizing metal phases in the clinker. However, as the oxygen binds to the metal phases in the clinker, the oxygen is thereby removed with the clinker from the cooler and thus from the coolant loop. The oxygen concentration is lowered with each loop and after a couple of loops the coolant becomes a low oxygen coolant and white clinker is produced.

Coolant losses due to leakage may be replaced by simple air, provided the amount of oxygen introduced by the replaced air is small relative to the total coolant volume, i.e. if it is ensured that the coolant remains a low oxygen cool-ant. With each loop of the coolant, the oxygen concentration is lowered again.

The efficiency of modern clinker coolers depends on the recuperated air volume and temperature, and is typically in the range of 65-80% of the input heat from the clinker. The remaining, i.e. not recuperated thermal energy may be used as process heat by including at least one second heat exchanger, for cooling down the coolant and making the thermal energy available as process heat. For example, the at least one second heat exchanger may be a steam boiler for providing a turbine with steam and thereby drive a generator. The at least one second heat exchanger may be arranged in parallel (with respect to the coolant flow) to the first heat exchanger. Alternatively, the at least one second heat exchanger may be downstream (with respect to the coolant flow) the at least one first heat exchanger.

Only for better understanding, a clinker cooler has a clinker inlet for hot clinker and a clinker outlet for colder clinker. A cold low oxygen coolant is provided to at least one coolant inlet and drawn off via at least one coolant outlet. In most cases the clinker cooler has a grate floor onto which a bed of hot clinker is unloaded. The low oxygen coolant may be blown via grate openings into the bed of clinker, to contact the clinker grains forming said clinker bed. Thermal energy, i.e. heat is transferred from the hot clinker to the low oxygen coolant. This can be referred to as subjecting the clinker to a flow of the low oxygen coolant. Thereby, the hot clinker is cooled down and the low oxygen coolant is heated up. The heated low oxygen coolant is drawn off from the clinker cooler, e.g. via at least one cooler exhaust as coolant outlet.

The low oxygen coolant may consist of at least one inert gas. The term 'inert gas', strictly speaking, includes only so called noble gases. However, in the context of this application the term 'inert gas' includes all gases or mixtures of gases that will not undergo chemical reactions with the clinker under the conditions in the clinker cooler. Relevant is that the amount of free oxygen in the low oxygen coolant is low to avoid the formation of (higher) metal oxides. The low oxygen coolant provided to a coolant inlet of the clinker cooler may preferably be an inert gas like Helium (He), Argon (Ar), Nitrogen (N₂), carbon dioxide (CO₂), or the like or a mixture of inert gases with an oxygen contamination smaller than 2.5%, preferably smaller 1% even more preferred smaller 0.5% or even smaller than or equal to 0.1%.

Preferably, at least a part of the heated low oxygen coolant is provided to at least one second heat exchanger for cooling the low oxygen coolant and heating a heat carrier in return. The heated low oxygen coolant may be drawn off from the coolant outlet of the first heat exchanger and/or directly from a coolant outlet of the clinker cooler. In both cases the amount of thermal energy of the clinker that is not required for heating the combustion gas can be used as process heat for other sub-processes, like e.g. raw meal drying and heating and/or heating water in a boiler for feeding a turbine. In addition, the low oxygen coolant is further cooled down, thereby enhancing the cooling efficiency of the clinker cooler if at least a part of the cooled low oxygen coolant is provided to the clinker cooler again. The clinker cooler can thus be smaller, providing significant savings.

At least a part of the low oxygen coolant from a coolant outlet of said first heat exchanger and/or from a coolant outlet of said second heat exchanger may be provided to a coolant inlet of the clinker cooler to thereby recycle at least a part of the coolant. In other words, at least a part of the low oxygen coolant may thus be circulated between the clinker cooler and the first heat exchanger via said second heat exchanger, providing the further advantage that the amount of low oxygen coolant that needs to be replenished can be reduced to a very small fraction of the circulating low oxygen coolant.

When unloading the cement clinker from the kiln to the clinker cooler, the hot cement clinker may be transferred via a chute connecting a clinker outlet of the kiln with a clinker inlet of said clinker cooler.

Preferably, the pressure of the combustion gas at the clinker outlet of the kiln and/or the pressure of the low oxygen coolant at the clinker inlet of the clinker cooler are/is controlled such that the gas pressure of the combustion gas at the clinker outlet is smaller than or equal to the pressure of the low oxygen coolant at the clinker inlet. Thereby, it is avoided that large amounts of oxygen being comprised in the combustion gas enter the clinker cooler and affect the clinker quality. Losses of low oxygen coolant via the kiln can be accepted but should be kept small. Thus, the pressure difference between the clinker cooler's clinker inlet and the kiln's clinker outlet should be small as well. Small amounts of oxygen diluting the low oxygen coolant can be accepted as well as long as the color of the clinker is not significantly deteriorated.

If one accepts small amounts of oxygen diluting the low oxygen coolant, the pressure of the combustion gas at the clinker outlet and/or the pressure of the low oxygen coolant at the clinker inlet may be controlled such that the pressure of the combustion gas at the clinker outlet is at least approximately similar. At least approximately similar means that the absolute value of the pressure difference between the combustion gas pressure at the kiln's clinker exit and the coolant pressure at the cooler's clinker inlet is smaller than or equal to 20% of the absolute value of the pressure difference between ambient pressure and the combustion gas pressure at the kiln's clinker exit. Preferably, the absolute value of the difference pressure between the combustion gas pressure at the kiln's clinker exit and the coolant pressure at the cooler's clinker inlet is smaller than or equal to 15%, more preferably smaller than or equal to 5% relative to the absolute value of the differential pressure between the combustion gas at the kiln's clinker exit and ambient pressure.

Dilution of the combustion gas with the low oxygen coolant and vice versa can be reduced to a negligible amount, if a lock for gaseous liquids is installed between the kiln and the clinker cooler. A very simple realization of such a lock is a hopper for clinker with a clinker inlet and a clinker outlet, wherein the clinker in the hopper separates the clinker inlet from the clinker outlet and thus prevents a direct gas exchange between the clinker cooler and the kiln. The clinker so to speak closes the passage for gases via the hopper. A rather high pressure drop between the hopper's clinker inlet and the hopper's clinker outlet would be necessary to provide a significant gaseous flow through the clinker in the hopper. The hopper may be a simple chute, being partially filled with clinker.

Only for sake of completeness, the hopper's inlet may be connected with the kiln's clinker outlet for dropping of clinker from the kiln into the hopper. Accordingly the hopper's clinker outlet may be connected with the clinker cooler's clinker inlet for charging the clinker cooler with clinker. Again, the low oxygen coolant pressure at the clinker cooler's clinker inlet is preferably slightly higher or equal to the pressure of the combustion gas at the kiln hood. Thereby, a slow flow of low oxygen coolant through the hopper can be realized, ensuring that the low oxygen coolant in the clinker cooler is not diluted by oxygen.

An apparatus being suited for making use of the above method comprises a kiln for sintering cement clinker with a cement clinker outlet to which combustion gas is provided as oxygen source for burning combustible matter, i.e. any kind of fuel in the kiln. The kiln's clinker outlet is connected to a clinker cooler's clinker inlet for charging the clinker cooler with hot clinker. The clinker cooler has at least one coolant inlet, the coolant inlet being connected with a low oxygen coolant source providing a gaseous, preferably inert low oxygen coolant with a low oxygen content as explained above. The clinker cooler comprises at least one zone for heating the low oxygen coolant and in turn cooling the clinker, e.g. a grate floor on top of which the clinker may be deposited. Via grate openings in the grate floor the clinker may be subjected to a flow of the low oxygen coolant.

At least one coolant outlet of the clinker cooler is connected to at least one first heat exchanger for cooling the low oxygen coolant and in turn preheating a combustion gas. Preferably, the first heat exchanger has a combustion gas inlet being connected with a combustion gas reservoir and a combustion gas outlet being connected with a combustion gas inlet of the kiln, for providing preheated combustion gas to the kiln. The combustion gas reservoir may be e.g. the atmosphere or another oxygen source, like a cryogenic air separation unit. The first heat exchanger additionally comprises at least one coolant outlet for drawing off the cooled low oxygen coolant. The first heat exchanger's at least one coolant outlet may be connected at least indirectly as low oxygen coolant source with the clinker cooler's coolant inlet and/or feed a low oxygen coolant reservoir, which in turn may be connected as low oxygen coolant source with at least one coolant inlet of the clinker cooler. At least a part of the low oxygen coolant can thus be circulated between the clinker cooler and the first heat exchanger.

Preferably dedusting means like, e.g. cyclone or a filter may be installed, preferably between at least of one the clinker cooler's coolant outlets and at least one of the first and/or second heat exchanger's coolant inlets.

At least one pressurizing means, like a fan, may be installed e.g. between the first and/or second heat exchanger's coolant outlet(s) for drawing off the low oxygen coolant from the respective outlet and for providing it e.g. to the at least one coolant inlet of the clinker cooler and/or said low oxygen coolant reservoir.

### Description of Drawings

In the following the invention will be described by way of example, without limitation of the general inventive concept, on examples of embodiment with reference to the drawings.

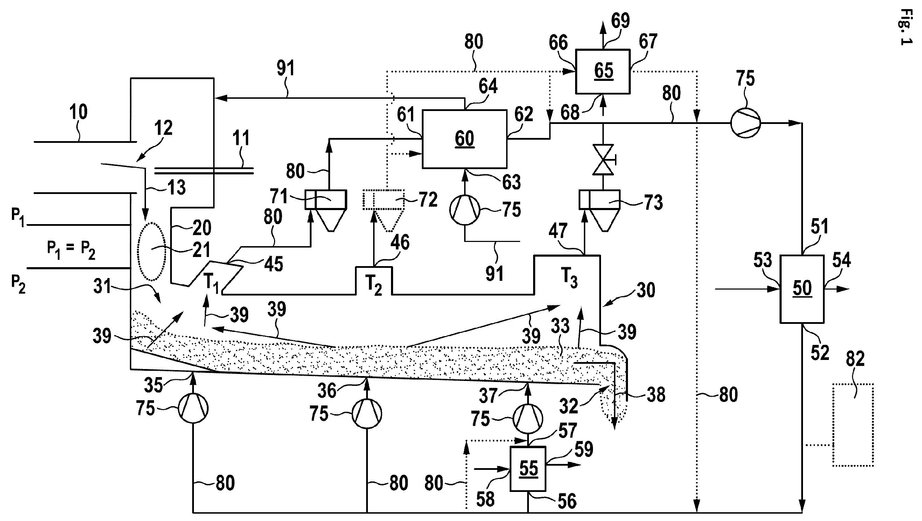

Figure 1 shows a schematic representation of an example apparatus illustrating the method.

In Figure 1 a preferred embodiment according to the invention is shown. Cement clinker 33 is sintered in a rotary kiln 10 and provided from a clinker outlet 12 of the kiln 10 via a chute 20 to a clinker cooler 30 as indicated by an arrow 13. In the clinker cooler 30 the clinker 33 forms a clinker bed and is cooled and conveyed to a clinker outlet 32 of the clinker cooler 30. The cooled clinker leaving the clinker cooler via its clinker outlet is symbolized by an arrow 38.

The kiln 10 has a combustion gas inlet, being at the same time the clinker outlet and thus carrying the same reference numeral, namely 12. The combustion gas is provided to the kiln 10 via a combustion gas line 91. The combustion gas may be simple air, almost pure oxygen or any other oxygen rich gas mixture. The combustion gas is preheated as explained below in detail.

The clinker cooler 30, briefly referred to as cooler 30 has at least one coolant inlet 35, 36, 37. In the depicted example there are three coolant inlets 35, 36, 37. The at least one coolant inlet 35, 36, 37 is connected to a low oxygen coolant source. In the example, the low oxygen coolant may be e.g. nitrogen (N₂). The low oxygen coolant is injected via said at least one clinker cooler 30 coolant inlet 35, 36, 37 into the clinker bed. Thereby a low oxygen coolant flow passes the clinker grains and a heat exchange between the clinker and the low oxygen coolant takes place, i.e. the clinker 33 is cooled down and the low oxygen coolant is in turn heated up. As the low oxygen coolant has a very low oxygen content, as explained above, unavoidable traces of iron or other metals cannot oxidize and the color of the clinker remains unchanged.

The clinker cooler has at least one coolant outlet 45, 46, 47 for removing the heated low oxygen coolant from the clinker cooler. The low oxygen coolant flow is symbolized by arrows 39. Depicted are as example three coolant outlets 45, 46, 47. Other numbers of coolant outlets are possible as well. The coolant outlets are connected via coolant pipes 80 and dedusting means 71, 72, 73, like e.g. at least one cyclone or filter to first and second heat exchangers 60, 50, 55 and 65. The second heat exchangers 50 55 and 65 are optional.

Close to the cooler's clinker inlet 31 is a first coolant outlet 45 of the clinker cooler 30. The low oxygen coolant removed from the clinker cooler 30 via the first coolant outlet 45 has the highest low oxygen coolant temperature T₁ compared to the low oxygen coolant temperatures T₂ and T₃ at the second or third coolant outlets, respectively, being further spaced from the clinker inlet 31. A typical value for T₁ may be between e.g. 850°C and 1200°C. From the cooler's first coolant outlet 45 a hot first coolant stream is drawn off, at least a part of its dust load is removed by dedusting means 71 (e.g. a cyclone or a filter) and provided to a coolant inlet 61 of a first heat exchanger 60. In this first heat exchanger 60, the low oxygen coolant is cooled and in turn the combustion gas is heated up. The first heat exchanger 60 may be a cross flow heat exchanger or preferably a counter-flow heat exchanger or a combination thereof. Other kinds of heat exchangers may be employed as well. It is only important, that the thermal energy is transferred from the low oxygen coolant to the combustion gas without mixing the low oxygen coolant with the combustion gas.

The low oxygen coolant is drawn off from the first heat exchanger 60 via a first heat exchanger's coolant outlet 62 by pressurizing means 75 and provided by a coolant pipe 80 to a first second heat exchanger's 50 coolant inlet 51. In the first second heat exchanger 50, which may be e.g. a boiler for feeding a turbine, the low oxygen coolant is further cooled down and in turn process heat is recuperated. The process heat may be used for any purpose, e.g. preheating of raw meal or generation of electricity. As indicated by a dotted line, the first second heat exchanger can be omitted and/or bypassed.

The example clinker cooler 30 has as example three coolant inlets 35, 36, 37, i.e. at least one first inlet 35, being close to the kiln, at least one second coolant inlet 36 being in between of the first coolant inlet and at least one third coolant inlet, the latter being close to the cooler's clinker outlet 32. The clinker 33 being cooled by the low oxygen coolant entering the cooler 30 close to the clinker outlet 32 is already cooled down to moderate temperatures, and thus it might be necessary to further cool the low oxygen coolant before injecting it into the clinker bed via the third coolant inlet 37 to recuperate the remaining heat. To this end, a second second heat exchanger may be provided, which is optional or may be bypassed as indicated by a dotted coolant pipe 80. The coolant provided to the at least one first coolant inlet 35 close to the clinker inlet of the cooler 30 is preferably warmer than the coolant inlet 37 being closer to the clinker outlet 32 of the cooler 30.

As apparent from figure 1 at least a part of the heated low oxygen coolant as provided by cooler 30, is cooled in a first heat exchanger 60, thereby transferring thermal energy to the combustion gas and recirculated to the cooler 30. In other words, the first heat exchanger's coolant outlet 62 can be considered as coolant source for the cooler 30. Optionally a coolant reservoir 82 may be connected to a coolant pipe 80 or integrated in the loop. The object of the process would be to realize a closed loop of the low oxygen coolant, to thereby avoid the costs for compensation of low oxygen coolant losses.

To reduce low oxygen coolant losses to a minimum and at the same time avoid dilution of the low oxygen coolant with oxygen, the low oxygen coolant pressure P₂ at the cooler's clinker inlet 31 is at least approximately similar to the combustion gas pressure P₁ at the other side of the chute 20, i.e. at the kiln's combustion gas inlet 12. Thereby a gray zone 21 of low pressure drop is obtained in the chute 20 and any gas exchange is only due to diffusion and turbulences caused by clinker dropping as indicated by arrow 13. To avoid dilution of the low oxygen coolant by the combustion gas, the pressure P₂ may be slightly higher than the P₁. This causes a flow of the low oxygen coolant towards the kiln which has to be compensated, but reduces the amount of combustion gas entering the cooler and thus the low oxygen coolant loop provided by coolant pipes 80.

The cooler 30 in figure 1 has three coolant outlets, a first outlet 45 at the hot end of the cooler, an intermediate (second) coolant outlet 46 and a third coolant outlet 47 at the cold end of the cooler 30. The second coolant outlet 46 is optional. The low oxygen coolant drawn off from the cooler via the second outlet is preferably subjected to (as well optional) dust removal means as indicated by ref. numeral 72 (e.g. a cyclone or a filter) and may be provided to at least one of first and/or second heat exchangers 60, 50, 55, 65 (in any combination) as indicated by dotted lines.

The temperature T₃ of the low oxygen coolant drawn off at the cold end of the clinker cooler via the third coolant outlet 47, is usually too low to provide the low oxygen coolant to the first heat exchanger 60 as heat source, however different to the figure it may be provided to a first stage of the first heat exchanger 60 for pre warming the combustion gas which is subsequently preheated as depicted. Dust removal is recommended as indicated by reference numeral 73.

In the figure, the low oxygen coolant drawn off at the cold end of the clinker cooler 30 is provided to the first second heat exchanger, may be stored in an optional reservoir 82 and/or provided to at least one of the clinker cooler's coolant inlets, to thereby circulate at least a part of the low oxygen coolant.

### List of reference numerals

- 10: kiln
- 11: burner for providing fuel to the kiln
- 12: clinker outlet of kiln and combustion gas inlet of kiln
- 13: arrow symbolizing clinker drop
- 20: chute
- 21: zone of low pressure drop
- 30: clinker cooler
- 31: clinker inlet of clinker cooler
- 32: clinker outlet of clinker cooler
- 33: clinker in clinker cooler
- 35: first coolant inlet of clinker cooler
- 36: second coolant inlet of clinker cooler
- 37: third coolant inlet of clinker cooler
- 38: arrow symbolizing clinker drop off from clinker cooler
- 39: arrows symbolizing low oxygen coolant flow in clinker cooler
- 45: first coolant outlet of clinker cooler
- 46: second coolant outlet of clinker cooler
- 47: third coolant outlet of clinker cooler
- 50: first second heat exchanger (e.g. a boiler)
- 51: low oxygen coolant inlet of first second heat exchanger 50
- 52: low oxygen coolant outlet of first second heat exchanger 50
- 53: heat carrier inlet (e.g. water inlet)
- 54: heat carrier outlet (e.g. water outlet)
- 55: further second heat exchanger
- 56: low oxygen coolant inlet of further second heat exchanger 55
- 57: low oxygen coolant outlet of further second heat exchanger 55
- 58: heat carrier inlet (e.g. air inlet)
- 59: heat carrier outlet (e.g. air outlet)
- 60: first heat exchanger
- 61: low oxygen coolant inlet of first heat exchanger 60
- 62: low oxygen coolant outlet of first heat exchanger 60
- 63: combustion gas inlet of first heat exchanger 60
- 64: combustion gas outlet of first heat exchanger 60
- 65: third second heat exchanger (optional)
- 66: low oxygen coolant inlet of third second heat exchanger 65
- 67: low oxygen coolant outlet of third second heat exchanger 65
- 68: heat carrier inlet (e.g. water inlet)
- 69: heat carrier outlet (e.g. water outlet)
- 71: dedusting means (e.g. cyclone)
- 72: dedusting means (e.g. cyclone)
- 73: dedusting means (e.g. cyclone)
- 75: pressurizing means
- 80: coolant pipes
- 82: coolant reservoir
- 91: combustion gas conduit
- P₁: pressure close to/at combustion gas inlet 12 of the kiln 10
- P₂: pressure close to/at clinker inlet 31 of clinker cooler 30

## Claims

1. Method for manufacturing white cement clinker (33), comprising at least:
- sintering cement clinker in a kiln (10),
- providing preheated combustion gas to the kiln (10),
- unloading cement clinker from the kiln (10) to a clinker cooler (30) for exchanging thermal energy between the hot clinker and a gaseous coolant by subjecting the clinker (33) to a flow of said gaseous coolant to thereby cool the clinker and in return heat the gaseous coolant,
**characterized in that**,
(i) the gaseous coolant is a low oxygen coolant with an oxygen content smaller than 7.5%,
(ii) at least a part of the heated low oxygen coolant is provided from the clinker cooler (30) to at least one first heat exchanger (60) to transfer thermal energy from the heated low oxygen coolant to the combustion gas and thereby preheat at least a part of the combustion gas and in return cool the low oxygen coolant.

2. The method of claim 1,
**characterized in that**,
at least a part of the heated low oxygen coolant is provided to at least one second heat exchanger (50, 55, 65) for cooling the low oxygen coolant and heating a heat carrier fluid in return.

3. The method of claim 2,
**characterized in that**,
at least a part of the low oxygen coolant is drawn from at least one coolant outlet (62) of the first heat exchanger (60) and provided to at least one coolant inlet (51, 56, 68) of at least one second heat exchanger (50, 55, 65).

4. Method of one of claims 1 to 3,
**characterized in that**,
the cooled low oxygen coolant is provided to at least one coolant inlet (35, 36, 37) of the clinker cooler (30).

5. Method of one of claims 1 to 4,
**characterized in that**,
the low oxygen coolant provided to at least one coolant inlet (35, 36, 37) of the clinker cooler (30) is an inert gas or a mixture of inert gases with an oxygen contamination smaller than or equal to 7.5% per volume of the low oxygen coolant.

6. Method of one of claims 1 to 5,
**characterized in that**,
unloading the cement clinker (33) is obtained via a chute (20) connecting a clinker outlet (12) of the kiln (10) with a clinker inlet (31) of said clinker cooler (30).

7. The method of claim 6,
**characterized in that**,
the pressure (P₁) of the combustion gas at the clinker outlet (12) of the kiln and/or the pressure (P₂) of the low oxygen coolant at the clinker inlet (31) of the clinker cooler (30) are/is controlled such that the pressure (P₁) of the combustion gas at the clinker outlet (12) of the kiln (10) is smaller than or equal to the pressure (P₂) of the low oxygen coolant at the clinker inlet (31) of the clinker cooler (30).

8. The method of claim 7,
**characterized in that**,
the pressure (P₁) of the combustion gas at the clinker outlet (12) of the kiln (10) and/or the pressure (P₂) of the low oxygen coolant at the clinker inlet (31) of the clinker cooler (30) are/is controlled such that the absolute value of the pressure difference (|P₁-P₂|) between the combustion gas at said clinker outlet (12) and the low oxygen coolant at the clinker inlet (31) of the clinker cooler (30) is smaller than or equal to 20% of the absolute value of the pressure difference between the combustion gas at said clinker outlet (12) and ambient pressure.

9. Method of one of the preceding claims,
**characterized in that**,
the combustion gas is oxygen or any mixture of gases comprising at least oxygen.

10. Apparatus for manufacturing cement clinker, comprising at least:
- a kiln (10) for sintering cement clinker with a cement clinker outlet (12) and at least one combustion gas inlet (12),
- a clinker cooler (30) with a clinker inlet (31), said clinker inlet (31) being connected to the kiln's clinker outlet (12) for unloading cement clinker (33) from the kiln (10) to the clinker cooler (30) and with at least one coolant inlet (35, 36,37) and at least one coolant outlet (45, 46, 47),
**characterized in that,**
the at least one coolant inlet (35, 36, 37) of the clinker cooler (30) is connected with a low oxygen coolant source for providing a low oxygen coolant to the clinker cooler (30) and **in that** the apparatus further comprises at least one first heat exchanger (60) for preheating the combustion gas and cooling in turn the low oxygen coolant, wherein the at least one first heat exchanger (60) comprises a combustion gas outlet (64) being connected to the kiln's combustion gas inlet (12) for providing preheated combustion gas to the kiln (10).

11. Apparatus of claim 10,
**characterized in that**
the at least one clinker cooler's coolant outlet (45, 46) is connected to dedusting means (71, 72) for dedusting the low oxygen coolant subsequently provided to the at least one first heat exchanger (60).

12. Apparatus of claim 10 or claim 11,
**characterized in that**,
the low oxygen coolant drawn off from the at least one clinker cooler's coolant outlet (45, 46, 47) and/or at least one coolant outlet (62) of the first heat exchanger is connected to the coolant inlet (51, 56, 66) of at least one second heat exchanger (50, 55, 65) for cooling the low oxygen coolant and in turn providing process heat to a heat carrier.

13. Apparatus of one of claims 10 to 12,
**characterized in that**,
a low pressure inlet of at least one pressurizing means (75) for pressurizing the low oxygen coolant is connected to at least one of the first and/or second heat exchangers' coolant outlets (52, 57, 62, 67) for drawing the low oxygen coolant and **in that** a pressure outlet of said pressurizing means (75) is connected with a low oxygen coolant reservoir (82) and/or at least one coolant inlet (35, 36, 37) of the clinker cooler (30).

## Patentansprüche

1. Verfahren zur Herstellung von Weißzementklinker (33), welches zumindest aufweist:
- Sintern von Zementklinker in einem Ofen (10),
- Zuführen von vorgewärmtem Verbrennungsgas in den Ofen (10),
- Austragen des Zementklinkers aus dem Ofen (10) in einen Klinkerkühler (30) zum Austausch von Wärmeenergie zwischen dem heißen Klinker und einem gasförmigen Kühlmittel, dadurch dass der Klinker (33) einem Strom dieses Kühlmittels ausgesetzt wird, um den Klinker zu kühlen und im Gegenzug das gasförmige Kühlmittel aufzuheizen,
**dadurch gekennzeichnet, dass**
(i) das gasförmige Kühlmittel ein sauerstoffarmes Kühlmittel ist, mit einem Sauerstoffanteil kleiner als 7,5%,
(ii) zumindest ein Teil des aufgeheizten sauerstoffarmen Kühlmittels vom Klinkerkühler (30) mindestens einem ersten Wärmetauscher (60) zugeführt wird, um Wärmeenergie vom aufgeheizten sauerstoffarmen Kühlmittel auf das Verbrennungsgas zu übertragen und dadurch wenigstens einen Teil des Verbrennungsgases vorzuwärmen und im Gegenzug das sauerstoffarme Kühlmittel abzukühlen.

2. Verfahren nach Anspruch 1
**dadurch gekennzeichnet, dass**
zumindest ein Teil des aufgeheizten sauerstoffarmen Kühlmittels mindestens einem zweiten Wärmetauscher (50, 55, 65) zugeführt wird, um das sauerstoffarme Kühlmittel abzukühlen und im Gegenzug ein Wärmeträgerfluid zu erhitzen.

3. Verfahren nach Anspruch 2
**dadurch gekennzeichnet, dass**
zumindest ein Teil des sauerstoffarmen Kühlmittels durch mindestens einen Kühlmittelauslass (62) des ersten Wärmetauschers (60) abgezogen und mindestens einem Kühlmitteleinlass (51, 56, 68) mindestens eines zweiten Wärmetauschers (50, 55, 65) zugeführt wird.

4. Verfahren nach einem der Ansprüche 1 bis 3
**dadurch gekennzeichnet, dass**
das abgekühlte sauerstoffarme Kühlmittel mindestens einem Kühlmitteleinlass (35, 36, 37) des Klinkerkühlers (30) zugeführt wird.

5. Verfahren nach einem der Ansprüche 1 bis 4
**dadurch gekennzeichnet, dass**
das sauerstoffarme Kühlmittel, das dem mindestens einen Kühlmitteleinlass (35, 36, 37) des Klinkerkühlers (30) zugeführt wird, ein inertes Gas oder eine Mischung inerter Gase ist, mit einer Sauerstoffverunreinigung von kleiner oder gleich 7,5 Volumenprozent des sauerstoffarmen Kühlmittels.

6. Verfahren nach einem der Ansprüche 1 bis 5
**dadurch gekennzeichnet, dass**
das Austragen der Zementklinkers (33) über eine Rutsche (20) erfolgt, die einen Klinkerauslass (12) des Ofens (10) mit einem Klinkereinlass (31) des Klinkerkühlers (30) verbindet.

7. Verfahren nach Anspruch 6
**dadurch gekennzeichnet, dass**
der Druck (P₁) des Verbrennungsgases am Klinkerauslass (12) des Ofens (10) und/oder der Druck (P₂) des sauerstoffarmen Kühlmittels am Klinkereinlass (31) des Klinkerkühlers (30) so geregelt werden/wird, dass der Druck (P₁) des Verbrennungsgases am Klinkerauslass (12) des Ofens (10) kleiner oder gleich dem Druck (P₂) des sauerstoffarmen Kühlmittels am Klinkereinlass (31) des Klinkerkühlers (30) ist.

8. Verfahren nach Anspruch 7
**dadurch gekennzeichnet, dass**
der Druck (P₁) des Verbrennungsgases am Klinkerauslass (12) des Ofens (10) und/oder der Druck (P₂) des sauerstoffarmen Kühlmittels am Klinkereinlass (31) des Klinkerkühlers (30) so geregelt werden/wird, dass der Absolutwert der Druckdifferenz (|P₁-P₂|) zwischen dem Verbrennungsgas am Klinkerauslass (12) und dem sauerstoffarmen Kühlmittel am Klinkereinlass (31) des Klinkerkühlers (30) kleiner oder gleich 20% des Absolutwerts der Druckdifferenz zwischen dem Verbrennungsgas am Klinkerauslass (12) und dem Umgebungsdruck ist.

9. Verfahren nach einem der vorhergehenden Ansprüche
**dadurch gekennzeichnet, dass**
das Verbrennungsgas Sauerstoff oder eine beliebige Mischung von Gasen, die wenigstens Sauerstoff enthalten, ist.

10. Vorrichtung zur Herstellung von Zementklinker, zumindest bestehend aus:
- einem Ofen (10) zum Sintern von Zementklinker mit einem Zementklinkerauslass (12) und wenigstens einem Verbrennungsgaseinlass (12),
- einem Klinkerkühler (30) mit einem Klinkereinlass (31), wobei dieser Klinkereinlass (31) mit dem Klinkerauslass (12) des Ofen verbunden ist, um Zementklinker (33) aus dem Ofen (10) in den Klinkerkühler (30) auszutragen, und mit wenigstens einem Kühlmitteleinlass (35, 36, 37) und mit wenigstens einem Kühlmittelauslass (45, 46, 47),
**dadurch gekennzeichnet, dass**
der wenigstens eine Kühlmitteleinlass (35, 36, 37) des Klinkerkühlers (30) mit einer Quelle eines sauerstoffarmen Kühlmittels verbunden ist, um dem Klinkerkühler (30) ein sauerstoffarmes Kühlmittel zur Verfügung zu stellen und dass die Vorrichtung weiterhin mindestens einen ersten Wärmetauscher (60) umfasst, zur Vorwärmung des Verbrennungsgases und im Gegenzug Kühlung des sauerstoffarmen Kühlmittels, wobei der mindestens eine erste Wärmetauscher (60) einen Verbrennungsgasauslass (64) umfasst, der mit dem Verbrennungsgaseinlass (12) des Ofens verbunden ist, um dem Ofen (10) vorgewärmte Verbrennungsluft zuzuführen.

11. Vorrichtung nach Anspruch 10
**dadurch gekennzeichnet, dass**
der mindestens eine Kühlmittelauslass (45, 46) des Kühlers verbunden ist mit (einer) Entstaubungsvorrichtung(en) (71, 72) zur Entstaubung des sauerstoffarmen Kühlmittels, welches nachfolgend dem mindestens einen ersten Wärmetauscher (60) zugeführt wird.

12. Vorrichtung nach Anspruch 10 oder 11
**dadurch gekennzeichnet, dass**
das sauerstoffarme Kühlmittel, das vom mindestens einen Kühlmittelauslass (45, 46, 47) des Kühlers und/oder dem mindestens einen Kühlmittelauslass (62) des ersten Wärmetauschers abgezogen wird, mit dem Kühlmitteleinlass (51, 56, 66) mindestens eines zweiten Wärmetauschers(50, 55, 65) verbunden ist, um das sauerstoffarme Kühlmittel abzukühlen und im Gegenzug Prozesswärme an ein Wärmeträgerfluid zu übertragen.

13. Vorrichtung nach einem der Ansprüche 10 bis 12
**dadurch gekennzeichnet, dass**
ein Niederdruckeingang mindestens eines Druckerzeugers (75), um das sauerstoffarme Kühlmittel unter Druck zu setzen, mit mindestens einem der Kühlmittelauslässe (52, 57, 62, 67) der ersten und/oder zweiten Wärmetauscher verbunden ist, um das sauerstoffarme Kühlmittel abzuziehen und dadurch, dass ein Druckausgang des Druckerzeugers (75) mit einem Speicher für sauerstoffarmes Kühlmittel (82) und/oder mindestens einem Kühlmitteleinlass (35, 36, 37) des Klinkerkühlers (30) verbunden ist.

## Revendications

1. Une méthode pour fabriquer des scories de ciment blanc (33), comprenant au moins :
- l'agglomération de scories de ciment dans un four (10),
- la fourniture d'un gaz de combustion préchauffé au four (10),
- le déchargement des scories de ciment du four (10) dans un refroidisseur de scories (30) pour échanger l'énergie thermique entre les scories chaudes et un réfrigérant gazeux en exposant les scories (33) à un flux dudit réfrigérant gazeux pour, par conséquent, refroidir les scories et en retour chauffer le réfrigérant gazeux,
**caractérisée en ce que**
(i) le réfrigérant gazeux est un réfrigérant faible en oxygène avec un contenu en oxygène inférieur à 7,5%,
(ii) au moins une partie du réfrigérant faible en oxygène chauffé est fournie à partir du refroidisseur de scories (30) vers au moins un premier échangeur thermique (60) pour transférer de l'énergie thermique à partir du réfrigérant faible en oxygène chauffé vers le gaz de combustion et par conséquent pour préchauffer au moins une partie du gaz de combustion et en retour, refroidir le réfrigérant faible en oxygène.

2. La méthode de la revendication 1,
**caractérisée en ce que**
au moins une partie du réfrigérant faible en oxygène chauffé est fournie à au moins un deuxième échangeur thermique (50, 55, 65) pour refroidir le réfrigérant faible en oxygène et chauffer un fluide caloporteur en retour.

3. La méthode de la revendication 2,
**caractérisé en ce que**
au moins une partie du réfrigérant faible en oxygène est retirée d'au moins une sortie de réfrigérant (62) du premier échangeur thermique (60) et fournie à au moins une entrée de réfrigérant (51, 56, 68) d'au moins un deuxième échangeur thermique (50, 55, 65).

4. La méthode de l'une des revendications 1 à 3,
**caractérisée en ce que**
le réfrigérant faible en oxygène refroidi est fourni à au moins une entrée de réfrigérant (35, 36, 37) du refroidisseur de scories (30).

5. La méthode de l'une des revendications 1 à 4,
**caractérisée en ce que**
le réfrigérant faible en oxygène fourni à au moins une entrée de réfrigérant (35, 36, 37) du refroidisseur de scories (30) est un gaz inerte ou un mélange de gaz inertes avec une contamination en oxygène inférieure ou égale à 7,5% par volume du réfrigérant faible en oxygène.

6. La méthode de l'une des revendications 1 à 5,
**caractérisée en ce que**
Le déchargement des scories de ciment (33) est obtenu via une goulotte (20) connectant une sortie de scories (12) du four (10) avec une entrée de scories (31) dudit refroidisseur de scories (30).

7. La méthode de la revendication 6,
**caractérisée en ce que**
La pression (P1) du gaz de combustion à la sortie des scories (12) du four et/ou la pression (P2) du réfrigérant faible en oxygène à l'entrée des scories (31) du refroidisseur de scories (30) sont / est contrôlée(s) de sorte que la pression (P1) du gaz de combustion à la sortie des scories (12) du four (10) est inférieure ou égale à la pression (P2) du réfrigérant faible en oxygène à l'entrée des scories (31) du refroidisseur de scories (30).

8. La méthode de la revendication 7,
**caractérisée en ce que**
la pression (P1) du gaz de combustion à la sortie des scories (12) du four (10) et/ou la pression (P2) du réfrigérant faible en oxygène à l'entrée des scories (31) du refroidisseur de scories (30) sont / est contrôlée(s) de sorte que la valeur absolue de la différence de pression (|P1 - P2|) entre le gaz de combustion à ladite sortie de scories (12) et le réfrigérant faible en oxygène à l'entrée des scories (31) du refroidisseur de scories (30) est inférieure ou égale à 20% de la valeur absolue de la différence de pression entre le gaz de combustion à ladite sortie de scories (12) et la pression ambiante.

9. La méthode de l'une des revendications précédentes,
**caractérisée en ce que**
le gaz de combustion est de l'oxygène ou un mélange de gaz comprenant au moins de l'oxygène.

10. Un appareil pour fabriquer des scories de ciment, comprenant au moins :
- un four (10) pour agglomérer les scories de ciment avec une sortie des scories de ciment (12) et au moins une entrée de gaz de combustion (12),
- un refroidisseur de scories (30) avec une entrée de scories (31), ladite entrée de scories (31) étant raccordée à la sortie de scories du four (12) pour décharger les scories de ciment (33) du four (10) jusqu'au refroidisseur de scories (30) et avec au moins une entrée de réfrigérant (35, 36, 37) et au moins une sortie de réfrigérant (45, 46, 47),
**caractérisé en ce que**
au moins l'entrée de réfrigérant (35, 36, 37) du refroidisseur de scories (30) est connectée avec une source de réfrigérant faible en oxygène pour fournir un réfrigérant faible en oxygène jusqu'au refroidisseur de scories (30) et **en ce que** l'appareil comprend de plus au moins un premier échangeur thermique (60) pour préchauffer le gaz de combustion et refroidir à son tour le réfrigérant faible en oxygène, où au moins un premier échangeur thermique (60) comprend une sortie de gaz de combustion (64) étant connectée à l'entrée de gaz de combustion du four (12) pour fournir un gaz de combustion préchauffé au four (10).

11. L'appareil de la revendication 10,
**caractérisé en ce que**
au moins une sortie du réfrigérant du refroidisseur de scories (45, 46) est connectée au dispositif de dépoussiérage (71, 72) pour dépoussiérer le réfrigérant faible en oxygène fourni, de façon subséquente, à au moins un premier échangeur thermique (60).

12. L'appareil de la revendication 10 ou 11,
**caractérisé en ce que**
le réfrigérant faible en oxygène retiré d'au moins une sortie du réfrigérant du refroidisseur de scories (45, 46, 47) et/ou au moins une sortie du réfrigérant (62) du premier échangeur thermique est connectée à l'entrée de réfrigérant (51, 56, 66) d'au moins un deuxième échangeur thermique (50, 55, 65) pour refroidir le réfrigérant faible en oxygène et à son tour fournir un processus de chaleur à un caloporteur.

13. L'appareil de l'une des revendications 10 à 12,
**caractérisé en ce que**
une entrée de basse pression d'au moins un dispositif de pressurisation (75) pour mettre sous pression le réfrigérant faible en oxygène est connectée à au moins une sorties du premier ou deuxième réfrigérant des échangeurs thermiques (52, 57, 62, 67) pour retirer le réfrigérant faible en oxygène et **en ce qu'**une sortie de pression dudit dispositif de pressurisation (75) est connectée à un réservoir de réfrigérant faible en oxygène (82) et/ou au moins une entrée de réfrigérant (35, 36, 37) du refroidisseur de scories (30).
